# EUROPÄISCHE PATENTSCHRIFT

(11) **EP 3 555 992 B1**
(45) Veröffentlichungstag und Bekanntmachung des Hinweises auf die Patenterteilung: **14.10.2020**
(21) Anmeldenummer: 17816742.5
(22) Anmeldetag: 13.12.2017
(51) Int. Cl.: H02K 1/32, H02K 1/30, H02K 9/06, H02K 7/00, H02K 1/27, H02K 17/16, H02K 5/06

(54) **ELEKTRISCHE MASCHINE**
ELECTRIC MACHINE
MACHINE ÉLECTRIQUE

(30) Priorität: 15.12.2016 DE 102016225180
(43) Veröffentlichungstag der Anmeldung: 23.10.2019
(73) Patentinhaber: Vitesco Technologies GmbH, 30165 Hannover (DE)
(72) Erfinder: FRÖHLICH, Holger, 13127 Berlin (DE); FUKUMOTO, Isao, 14167 Berlin (DE)
(74) Vertreter: Waldmann, Georg Alexander
(86) Internationale Anmeldenummer: PCT/EP2017/082526
(87) Internationale Veröffentlichungsnummer: WO 2018/108968

(56) Entgegenhaltungen:
- EP-A1- 1 925 067
- EP-A2- 1 333 561
- DE-A1-102009 025 929
- DE-A1-102012 110 157
- DE-B- 1 162 466
- DE-U1- 9 408 559
- DE-U1- 9 408 559
- US-A- 2 764 704

## Beschreibung

Die Erfindung betrifft einen Rotor für eine elektrische Maschine.

In elektrischen Maschinen aller Leistungsklassen wird erhebliche Wärme entwickelt, die im Hinblick auf eine verbesserte Maschineneffizienz und im Hinblick auf eine höhere Lebensdauer der elektrischen Maschine mittels kühltechnischer Maßnahmen abzuführen ist. Der Rotor bzw. Läufer erzeugt üblicherweise Verlustwärme, welche teilweise durch Wärmeleitung und -strahlung über einen Luftspalt zwischen dem Rotor und einem Stator der elektrischen Maschine übertragen wird und von dort aus an ein Gehäuse der elektrischen Maschine abgegeben wird. Ein weiterer Teil der Verlustwärme kann über die Rotorwelle nach außen geleitet werden, wodurch sich die Wälzlager der Rotorwelle erwärmen.

Eine derartige thermische Lagerbelastung und eine sich einstellende Temperaturdifferenz zwischen Innenring- und Außenring führt zu hohen Kontaktspannungen im Lager, was ein Abrollen behindert und Schälbeanspruchung sowie Materialermüdung zur Folge haben kann. Zusätzlich wird durch derartig thermische Lagerbelastung der Schmierstoff der Wälzlager thermisch gealtert, zersetzt oder verbrannt und verändert seine anfänglich eingestellten Eigenschaften. Alles dies führt zu einer deutlichen Reduzierung der Lebensdauer der Wälzlager.

In vielen Anwendungsfällen, z.B. bei Elektromotoren, bei denen die Rotortemperatur größer ist als die Temperatur der Lageraufnahmen im Gehäuses der elektrischen Maschine, liegt eine Betriebstemperatur der Außenringe unterhalb der Temperatur der Innenringe. Dies führt zu einer Reduzierung der Lagerluft, welche bei übermäßiger Minderung eine hohe Vorspannung in den Lagern verursacht. Diese unerwünschte, sich im Betrieb einstellende zusätzliche Belastung des Lagers behindert das definierte Abrollen des Wälzkörpers und führt zu Schälbeanspruchungen sowie Materialermüdung, welche zum vorzeitigen Ausfall der Lager und somit der ganzen elektrischen Maschine führen können. Werden Lager mit größerer Lagerluft als normal verwendet, um diese thermische Betriebsspieländerung zu kompensieren, so kann dies negative Auswirkungen auf die elektrische Maschine haben, unter anderem erhöhte Schwingungen und größere Axialtoleranzen der Rotorwelle, was sich ungünstig auf das Betriebsverhalten des Motors auswirkt.

Sofern eine Kühlung der Rotorwelle bzw. des Rotorblechpakets möglich ist, kann dies direkte positive Auswirkungen auf das Betriebsverhalten der elektrischen Maschine sowie auf die Lebensdauer der Lagerung haben. Besonders vorteilhaft kann eine Kühlung des Rotorblechpakets auch einen großen Anteil zur Kühlung der Rotorwelle beisteuern. Durch eine Kühlung der Rotorwelle kann eine Verringerung der großen Temperaturunterschiede zwischen dem Innenring und dem Außenring des jeweiligen Lagers erreicht werden und damit die Lebensdauer der Lager verlängert werden.

Aus der DE 10 2009 012 324 A1 ist eine elektrische Maschine mit einer drehbaren Welle und einem mit der Welle verbundenen Rotor bekannt. Um die Kühlung des Rotors der elektrischen Maschine zu verbessern, weist die Welle einen sich in axialer Richtung der Welle erstreckenden Hohlraum auf, wobei der Hohlraum zur Aufnahme eines Kältemittels vorgesehen ist. Weiterhin umfasst die Welle eine innerhalb des Rotors angeordnete Verdampfereinheit und eine außerhalb des Rotors angeordnete Kondensatoreinheit, wobei die Kondensatoreinheit zur Kondensation des Kältemittels vorgesehen ist. Die elektrische Maschine gemäß der DE 10 2009 012 324 A1 ermöglicht eine Abfuhr von Verlustwärme einer elektrischen Maschine durch einen Wellenthermosiphon bei Maschinen ohne standardmäßige Zwangsluftkühlung. Allerdings ist diese elektrische Maschine apparativ sehr aufwändig und teuer.

Sofern eine elektrische Maschine ferner eine Mantel-Flüssigkeitskühlung in geschlossener Bauweise (gekapselt) aufweist, kann das Problem auftreten, dass der Rotor und die Wickelköpfe nahezu ungekühlt bleiben, wodurch die Leistungsfähigkeit der elektrischen Maschine eingeschränkt wird und die Gefahr besteht, dass die Lager der Rotorwelle temperaturbedingt ausfallen.

Aus der US 2 764 704 A ist ein Rotor für eine elektrische Maschine bekannt, bei dem auf einem äußeren zylinderförmigen Element aus einem Stahl ein Blechpaket angeordnet ist. das zylinderförmige Element ist über ein scheibenförmiges Element mit einer Drehachse verbunden, wobei die Verbindung eine Schweißverbindung ist. Innerhalb des scheibenförmigen Elements sind Öffnungen zur Durchführung eines Kühlmediums ausgebildet.

Die DE 10 2012 110 157 A1 offenbart einen Rotor für einen Asynchronmotor mit einem Blechlamellenpaket und mit einer ersten und einer zweiten Endscheibe, wobei die Endscheiben endseitig am Blechlamellenpaket angeordnet sind und wobei die Endscheiben zur drehbaren Lagerung des Rotors um eine Rotorachse ausgebildet sind. Die Endscheiben weisen Zentriermittel auf, durch die das Blechlamellenpaket zwischen den Endscheiben zentriert zur Rotorachse aufgenommen ist.

Der Erfindung liegt die Aufgabe zugrunde, einen Rotor für eine elektrische Maschine bereitzustellen, wobei der Rotor ein geringeres Massenträgheitsmoment aufweist und eine erhöhte Kühlung des Rotors ermöglicht wird, so dass eine mittlere Lagertemperatur sowie eine Temperaturdifferenz zwischen einem Lagerinnenring und einem Lageraußenring gesenkt werden können, um eine längere Lebensdauer zu erreichen und Ausfälle durch Materialermüdung zu vermeiden. Zudem kann die Montage der elektrischen Maschine vereinfacht werden.

Die Aufgabe wird jeweils gelöst durch die Gegenstände der unabhängigen Patentansprüche. Vorteilhafte Ausführungsformen sind Gegenstand der abhängigen Ansprüche, der folgenden Beschreibung sowie der Figuren.

Gemäß einem ersten Aspekt der Erfindung wird ein Rotor für eine elektrische Maschine bereitgestellt. Der Rotor umfasst ein Rotorblechpaket, einen Füllkörper aus einer Aluminium-Druckgusslegierung, welche an das Rotorblechpaket angegossen ist, einen ersten Wellenzapfen mit wenigstens einer Lufteintrittsöffnung, einen zweiten Wellenzapfen mit wenigstens einer Luftaustrittsöffnung und eine Lüftungseinheit. Der Füllkörper verbindet das Rotorblechpaket drehfest mit dem ersten Wellenzapfen und mit dem zweiten Wellenzapfen. Das Rotorblechpaket weist eine zentrale axiale Bohrung auf, welche durch den Füllkörper derart teilweise ausgefüllt wird, dass ein axialer Kühlkanal für Kühlluft innerhalb der zentralen Bohrung des Rotorblechpakets gebildet wird. Die Wellenzapfen treiben weiterhin die Lüftungseinheit an, und die Lüftungseinheit ist dazu eingerichtet, einen Luftstrom über die Lufteintrittsöffnung anzusaugen, durch den axialen Kühlkanal zu fördern und über die Luftaustrittsöffnung auszustoßen.

Insbesondere der axiale Kühlkanal und die Lüftungseinheit ermöglichen eine aktive Durchzugsbelüftung des Rotors, wobei ein zirkulierenden Luftstrom oder ein Aerosol-Strom erzeugt werden kann, welcher insbesondere innerhalb des Rotors entlang geführt wird und auch Wickelkopfräume eine elektrische Maschine kühlen kann, innerhalb welcher der Rotor verbaut sein kann.

Der Füllkörper erfüllt insbesondere die Funktion, Momente zwischen den Wellenzapfen und dem Rotorblechpaket zu übertragen. Dazu kann der Füllkörper derart an das Rotorblechpaket angegossen sein, dass der Füllkörper formschlüssig mit dem Rotorblechpaket verbunden ist. Weiterhin können die Wellenzapfen formschlüssig und kraftschlüssig mit dem Füllkörper verbunden sein. Auf diese Weise kann eine Welle-Nabe-Verbindung durch Form- und Kraftschluss der Wellenzapfen über den angegossen Füllkörper realisiert werden. Vorteilhaft ist weiterhin , dass auf eine durchgehende Welle verzichtet werden kann, und stattdessen ein übertragbares Drehmoment über die zwei Wellenzapfen gewährleistet werden kann.

Bei Fahrzeugantrieben, bei denen die rotatorischen und translatorischen Massen der Elektromotoren den Energiebedarf und damit die Batteriegröße maßgeblich bestimmen, besteht die Notwendigkeit, die Massen so gering wie möglich zu halten. D.h., dass der Rotor bzw. der Läufer der elektrischen Maschine mit einem möglichst geringen Massenträgheitsmoment ausgestattet sein sollte.

Der Rotor gemäß dem ersten Aspekt der Erfindung zeichnet sich durch ein besonders geringes rotatorisches Massenträgheitsmoment aus. Das besonders geringe Gewicht des Rotors ist von besonderem Wert für die Antriebseffizienz, da es sich bei dem Kurzschlussläufer um ein rotierendes Bauteil handelt, denn das rotatorische Massenträgheitsmoment des Rotors kann bei dieser Bauweise um mindestens 10 % gesenkt werden. Dieser Faktor bietet für das Betriebsverhalten wichtige Effizienzvorteile. Um dies zu erreichen, weist der erfindungsgemäße Rotor eine Architektur auf, mit der sich auf einen aktiv magnetflusslenkenden Blechpaketquerschnitt beschränkt werden kann, wodurch eine signifikante Gewichtsreduzierung des Kurzschlussläufers und eine Senkung dessen Massenträgheitsmoments ermöglicht wird. Dabei kann ein Durchmesser der zentralen axialen Bohrung innerhalb des Rotorblechpakets besonders groß gewählt werden. Auf ein aktives Füllmaterial eines Blechzuschnitts zwischen einer Rotorwelle und aktivem Blechmaterial des Rotorblechpakets kann hingegen verzichtet werden.

Stattdessen kann z.B. bei einem Angießen von Kurzschlussringen und Kurzschlussstäben an das Rotorblechpaket eines Rotors für einen Asynchronmotor auch der Bereich der ehemals inaktiven Blechzone mit einer Schmelze, insbesondere mit einer Leichtmetalllegierung, z.B. mit einer Aluminium-Druckgusslegierung, zumindest teilweise ausgegossen werden, wodurch der Füllkörper gebildet wird. Bei Synchronmotoren hingegen kann mittels eines Aluminiumdruckgussverfahrens der Füllkörper angegossen werden und gleichzeitig können Permanentmagnete fixiert werden. Für die Fixierung der Permanentmagnete können dabei spezielle Kanäle im Blech des Pakets vorgesehen sein. Ebenfalls ist es möglich bei Synchronmotoren im Bereich der ehemals inaktiven Blechzone, einen Rotorträger anzuordnen (Strangpressprofil).

Gemäß einer Ausführungsform ist der Rotor für eine elektrische Maschine in Form eines Synchronmotors geeignet. Das Rotorblechpaket bildet dabei Aufnahmekanäle aus, innerhalb welchen Permanentmagnete aufgenommen sind, wobei Freiräume zwischen den Permanentmagneten und den Aufnahmekanälen derart von dem Füllkörper ausgefüllt werden, dass die Permanentmagnete mittels des Füllkörpers innerhalb der Aufnahmekanäle fixiert sind.

Gemäß einer weiteren Ausführungsform ist der Rotor für eine elektrische Maschine in Form eines Asynchronmotors geeignet. Der Rotor umfasst dabei ferner einen ersten Kurzschlussring, einen zweiten Kurzschlussring und mehrere Kurzschlussstäbe. Der erste Kurschlussring besteht aus einer Aluminium-Druckgusslegierung, welche an das Rotorblechpaket angegossen ist. Der zweite Kurzschlussring besteht ebenfalls aus einer Aluminium-Druckgusslegierung, welche an das Rotorblechpaket angegossen ist. Weiterhin bestehen auch die mehreren Kurzschlussstäbe aus einer Aluminium-Druckgusslegierung, welche derart in axiale Nuten einer äußeren Mantelfläche des Rotorblechpakets gegossen ist, dass die Kurschlussstäbe jeweils mit dem ersten Kurzschlussring und mit dem zweiten Kurzschlussring verbunden sind.

Gemäß dieser Ausführungsform kann ein Rotorblechpaket paketiert werden, wobei das Rotorblechpaket mit Hohlräumen bzw. Nuten für die Kurzschlussstäbe versehen ist. Die Nuten des Rotorblechpakets bilden Kanäle, wobei eine Druckgussvorrichtung an einem stirnseitigen Ende des Rotorblechpaket platziert werden kann und die Kanäle beispielsweise durch einen Durchlass (in der Druckgussvorrichtung) mit einer Schmelze der Aluminium-Druckgusslegierung gefüllt werden können, wobei die mit erstarrter Schmelze gefüllten Kanäle die Kurzschlussstäbe des Kurzschlussläufers bilden.

Das Angießen der Aluminium-Druckgusslegierung kann dabei derart erfolgen, dass die Kurzschlussstäbe und die Kurzschlussringe mechanisch und elektrisch nicht mit dem Füllkörper verbunden sind. Bei der Aluminium-Druckgusslegierung, welche zum Herstellen der Kurzschlussstäbe verwendet werden, handelt es sich weiterhin bevorzugt um die gleiche Aluminium-Druckgusslegierung, welche zum Herstellen des ersten Kurzschlussrings und des zweiten Kurzschlussrings sowie zur Herstellung des Füllkörpers verwendet wird. Neben den allgemeinen Vorteilen, welche das Druckgießen mit sich bringt, ermöglicht diese Ausführungsform eine besonders hohe Funktionsintegration, d.h. die Herstellung einer formschlüssigen und kraftschlüssigen Verbindung zu den Wellenzapfen sowie die Gewichtsreduktion und Kostenreduktion bei der Herstellung der hybriden Komponenten des Rotors. Insbesondere ist eine Kostenreduktion durch die Möglichkeit gegeben, die einzelnen Elemente des Rotors kostenoptimiert in Segmentbauweise herzustellen.

Gemäß einer weiteren Ausführungsform umfasst die Lüftungseinheit eine Förderspirale, wobei eine Antriebswelle der Förderspirale drehfest innerhalb des ersten Wellenzapfens und innerhalb des zweiten Wellenzapfens gelagert ist, und die Förderspirale innerhalb des axialen Kühlkanals angeordnet ist.

Weiterhin kann die Lüftungseinheit in die Wellenzapfen integrierte Lüfterradschaufeln umfassen.

Ferner kann die Lüftungseinheit einen Axiallüfterradeinsatz umfassen, wobei der Axiallüfterradeinsatz formschlüssig drehfest mit dem Füllkörper verbunden ist und der Axiallüterradeinsatz innerhalb des axialen Kühlkanals angeordnet ist.

Gemäß einer weiteren Ausführungsform ist vorgesehen, dass von einer inneren Mantelfläche des Füllkörpers mehrere rippenartige erste Vorsprünge radial nach innen abstehen, und dass die Wellenzapfen mittels Befestigungsmitteln an rippenartigen zweiten Vorsprüngen des Füllkörpers befestigt sind, wobei die zweiten rippenartigen Vorsprünge ebenfalls von der inneren Mantelfläche des Grundkörpers radial nach innen abstehen. Die ersten Vorsprünge können vorteilhaft als Kühlrippen mit erhöhter Wärmeübertragungsfläche dienen, und dazu beitragen den Rotorträger und dadurch auch den Leichtbaurotor besser zu kühlen. Die zweiten Vorsprünge können bevorzugt im Querschnitt breiter ausgeführt sein als die ersten Vorsprünge, um eine besonders haltbare Befestigung des Füllkörpers an den Wellenzapfen zu ermöglichen. Ferner sind die zweiten Vorsprünge in Umfangsrichtung zwischen den ersten Vorsprüngen angeordnet, was besonders platzsparend ist.

Weiterhin kann die innere Mantelfläche des Füllkörpers jeweils einen Zentrierungsansatz für den ersten Wellenzapfen und für den zweiten Wellenzapfen ausbilden. Die Zentrierungsansätze ermöglichen eine besonders leichte vorgesehene Ausrichtung der Wellenzapfen an dem Füllkörper, wodurch die Montage des Rotors erleichtert wird.

Gemäß einer weiteren Ausführungsform ist vorgesehen, dass das Rotorblechpaket in axialer Richtung formschlüssig und kraftschlüssig mit dem Füllkörper verbunden ist. Der Füllkörper kann gemäß dieser Ausführungsform eine Klammerfunktion für die einzelnen Bleche des Rotorblechpakets übernehmen. Insbesondere kann der Füllkörper derart an das Rotorblechpaket angegossen sein, dass das Rotorblechpaket in einer umfänglichen Ausnehmung des Füllkörpers aufgenommen ist, wobei die Ausnehmung begrenzende Endabschnitte des Füllkörpers eine Verschiebung des Rotorblechpakets in axialer Richtung verhindern und das Rotorblechpaket in axialer Richtung kraftschlüssig zusammenhalten/verklammern können.

Gemäß einem zweiten Aspekt der Erfindung wird eine elektrische Maschine bereitgestellt. Die elektrische Maschine umfasst einen Rotor gemäß dem ersten Aspekt der Erfindung, wobei der Rotor eine in zwei Wälzlagern gelagerte Rotorwelle mit einem ersten Wellenzapfen und mit einem zweiten Wellenzapfen aufweist. Ferner umfasst die elektrische Maschine einen Stator mit einem Statorblechpaket und mit Stator-Wickelköpfen, welche an gegenüberliegenden Stirnseiten des Statorblechpakets angeordnet sind, sowie ein Gehäuse, welches den Stator in radialer Richtung umgibt. Der Stator und das Gehäuse bilden wenigstens einen äußeren Kühlkanal zwischen sich aus, welcher entlang des Statorblechpakets und der Stator-Wickelköpfe verläuft und zwei gegenüberliegende Stirnseiten der Stator-Wickelköpfe miteinander verbindet. Dabei ist die Lüftungseinheit des Rotors dazu eingerichtet, bei sich drehender Rotorwelle auf einer ersten Stirnseite des Rotorblechpakets des Rotors eine Sogseite und auf einer zweiten Stirnseite des Rotorblechpakets eine Druckseite auszubilden, so dass Luft auf der Sogseite angesaugt und durch den axialen Kühlkanal des Rotors sowie den äußeren Kühlkanal gefördert wird. Weiterhin umfasst das Gehäuse einen Flüssigkeits-Kühlkanal eines Umlaufkühlkreislaufs, innerhalb welchem eine Kühlflüssigkeit zirkuliert und das Gehäuse kühlt.

Die elektrische Maschine gemäß dem zweiten Aspekt der Erfindung ermöglicht einen aktiv mit Luft durchzugsbelüfteten Rotor und eine indirekte Anbindung einer entsprechenden Rotorkühlung an ein flüssigkeitsgekühltes Gehäuse, um auf diese Weise eine Verbesserung der Kühlung des Rotors, der Wickelköpfe und insbesondere der Wälzlager des Rotors zu ermöglichen. Mit anderen Worten wird vorgeschlagen, Wickelkopfräume an eine Flüssigkeitskühlung des Gehäuses heranzuführen bzw. anzubinden und einen zirkulierenden Luftstrom innerhalb des Rotors und innerhalb der Wickelkopfräume zu erzeugen. Auf diese Weise kann eine mittlere Lagertemperatur und eine Temperaturdifferenz zwischen einem Lager in einem Innenring und einem Außenring der Wälzlager des Rotors derart gesenkt werden, dass eine längere Lebensdauer der Wälzlager erreicht wird und Ausfälle durch Materialermüdung vermieden werden. Um die Durchzugsbelüftung bereitzustellen, umfasst der Rotor insbesondere die weiter oben im Zusammenhang mit dem erfindungsgemäßen Rotor beschriebene Lüftungseinheit.

Der Stator und das Gehäuse bilden dabei einen oder mehrere äußere Kühlkanale zwischen sich aus, welcher bzw. welche entlang des Statorblechpakets und der Wickelköpfe verläuft bzw. verlaufen und zwei gegenüberliegende Stirnseiten der Stator-Wickelköpfe miteinander verbindet bzw. verbinden. Der wenigstens eine äußere Kühlkanal kann in radialer Richtung durch eine äußere Mantelfläche des Stators einerseits und eine der Mantelfläche gegenüberliegende Innenwand des Gehäuses andererseits begrenzt sein. Mit anderen Worten kann der äußere Kühlkanal durch einen Zwischenraum zwischen Gehäuse, Stator und Stator-Wickelköpfen gebildet werden. In axialer Richtung, das heißt in Längsrichtung des Stators, erstreckt sich der äußere Kühlkanal entlang des gesamten Stators und der Stator-Wickelköpfe. Ferner kann der äußere Kühlkanal entlang des gesamten Umfangs des Stators spiralförmig verlaufen.

Die Lüftungseinheit ist dazu eingerichtet, bei sich drehendem Rotor bzw. Rotorblechpaket auf einer ersten Stirnseite des Rotorblechpakets eine Sogseite und auf einer zweiten Stirnseite des Rotorblechpakets eine Druckseite auszubilden, so dass Luft auf der Sogseite aus dem wenigstens einen Kühlkanal angesaugt und durch den axialen Kühlkanal des Rotors sowie den äußeren Kühlkanal oder die äußeren Kühlkanäle gefördert wird, wobei die Statorwickelköpfe passiert und gekühlt werden.

Der Umlaufkühlkreislauf kann eine Pumpe und einen Wärmetauscher zur Kühlung der Kühlflüssigkeit aufweisen. Die Pumpe kann die Kühlflüssigkeit aus dem Bereich des Flüssigkeits-Kühlkanals des Gehäuses ansaugen und durch den Wärmetauscher fördern, wo es durch ein zweites Kühlmedium gekühlt wird, beispielsweise durch Kühlwasser eines Hauptkühlkreislaufs, und anschließend wieder zurück in den Flüssigkeits-Kühlkanal des Gehäuses fördern.

Im Folgenden werden Ausführungsbeispiele der Erfindung anhand der schematischen Zeichnung näher erläutert, wobei gleiche oder ähnliche Elemente mit dem gleichen Bezugszeichen versehen sind. Hierbei zeigt
- Fig. 1: eine Längsschnittdarstellung eines Ausführungsbeispiels eines erfindungsgemäßen Rotors für eine elektrische Maschine,
- Fig. 2: eine Längsdreiviertelschnittdarstellung eines weiteren Ausführungsbeispiels eines erfindungsgemäßen Rotors für eine elektrische Maschine in Form eines Synchronmotors,
- Fig. 3: eine perspektivische Explosionsdarstellung des Rotors nach Fig. 2,
- Fig. 4: eine Querschnittsdarstellung des Rotors nach Fig. 2,
- Fig. 5: eine perspektivische Explosionsdarstellung eines weiteren Ausführungsbeispiels eines erfindungsgemäßen Rotors für eine elektrische Maschine in Form eines Asynchronmotors,
- Fig. 6: eine Querschnittsdarstellung des Rotors nach Fig. 5,
- Fig. 7: eine perspektivische Explosionsdarstellung eines weiteren Ausführungsbeispiels eines erfindungsgemäßen Rotors für eine elektrische Maschine in Form eines Asynchronmotors,
- Fig. 8: eine Querschnittsdarstellung des Rotors nach Fig. 7, und
- Fig. 9: eine schematische Längsschnitt-Darstellung einer elektrische Maschine.

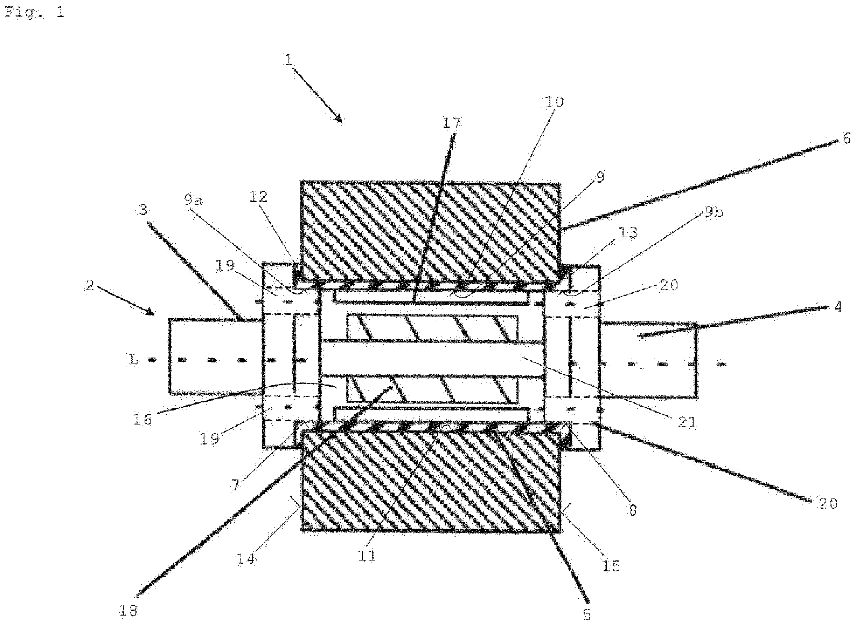

Fig.1 zeigt einen Rotor 1 mit einer Rotorwelle 2, wobei die Rotorwelle 2 einen ersten Wellenzapfen 3 und einen zweiten Wellenzapfen 4 umfasst. Weiterhin umfasst der Rotor 1 einen Füllanguss bzw. Füllkörper 5 aus einer Aluminium-Druckgusslegierung und ein Rotorblechpaket 6.

Der Füllkörper 5 ist an das Rotorblechpaket 6 angegossen und derartig mit dem Rotorblechpaket 6 verbunden, z.B. formschlüssig, dass der Füllkörper 5 und das Rotorblechpaket 6 drehfest miteinander verbunden sind. Somit kann ein Drehmoment von dem Füllkörper 5 auf das Rotorblechpaket 6 übertragen werden und umgekehrt. Insbesondere kann eine Rotationsbewegung des Füllkörpers 5 um eine Längsachse L des Rotors 1 auf das Rotorblechpaket 6 übertragen werden, sodass sich auch das Rotorblechpaket 6 um die Längsachse L dreht.

Der Füllkörper 5 ist im Wesentlichen von zylindrischer Gestalt und weist einen ringförmigen Querschnitt auf. Der erste Wellenzapfen 3 weist an seinem in Fig. 1 rechts dargestellten stirnseitigen Ende einen ersten Zentrierbund 7 auf, und der zweite Wellenzapfen 4 weist an seinem in Fig. 1 links dargestellten stirnseitigen Ende einen zweiten Zentrierbund 8 auf. Eine innere Mantelfläche 9 des Füllkörpers 5 bildet in seinen axialen Endbereichen jeweils einen Zentrierungsansatz 9a, 9b für den ersten Zentrierbund 7 des ersten Wellenzapfens und für den zweiten Zentrierbund 8 des zweiten Wellenzapfens 4 aus. Der erste Zentrierbund 7 ist in den ersten Zentrierungsansatz 9a gesteckt, und der zweite Zentrierbund 8 ist in den zweiten Zentrierungsansatz 9b gesteckt. Auf diese Weise sind die Wellenzapfen 3, 4 bezüglich des Füllkörpers 5 ausgerichtet, wobei eine Längsachse L der Wellenzapfen 3, 4 einer Längsachse L des Füllkörpers 5 entspricht.

Der Füllkörper 5 bildet an seinem Außenumfang eine Ausnehmung 10 aus, welche sich über einen großen Bereich des Außenumfangs erstreckt. Der Füllkörper 5 ist an das Rotorblechpaket 6 angegossen, sodass die Ausnehmung 10 des Füllkörpers mit einer zentralen Bohrung 11 des Rotorblechpakets 6 korrespondiert. Die Ausnehmung 10 wird in der Längsrichtung L durch zwei radial verlaufende Endabschnitte 12 und 13 begrenzt. Das Rotorblechpaket 6 weist eine in Fig. 1 links dargestellte erste Stirnseite 14 und eine in Fig. 1 rechts dargestellte zweite Stirnseite 15 auf. Der Füllkörper 5 ist derart mit seinen Endabschnitten 12 und 13 an die Stirnseiten 14 und 15 des Rotorblechpaket 6 angegossen, dass die einzelnen Bleche des Rotorblechpaket 6 durch die Endabschnitte 12 und 13 axial aneinander gepresst werden (Kraftschluss), zumindest aber axial zusammengehalten werden (Formschluss). Auf diese Weise können die Endabschnitte 12 und 13 das Rotorblechpaket 6 zusammenhalten oder verklemmen, d.h. sie erfüllen eine Art "Klammer-Funktion" für das Rotorblechpaket 6, welches durch die Endabschnitte 12 und 13 in der Längsrichtung L zusammengehalten wird.

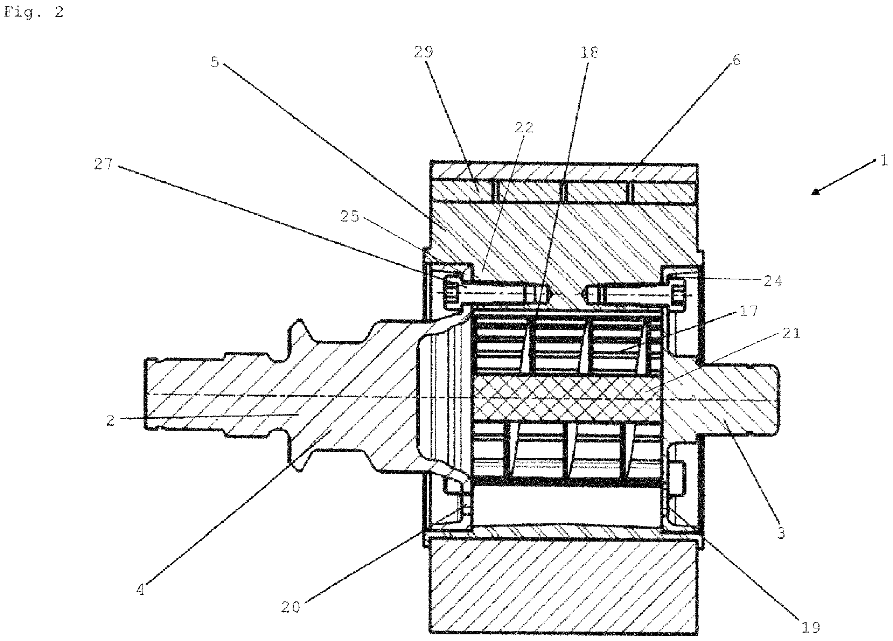

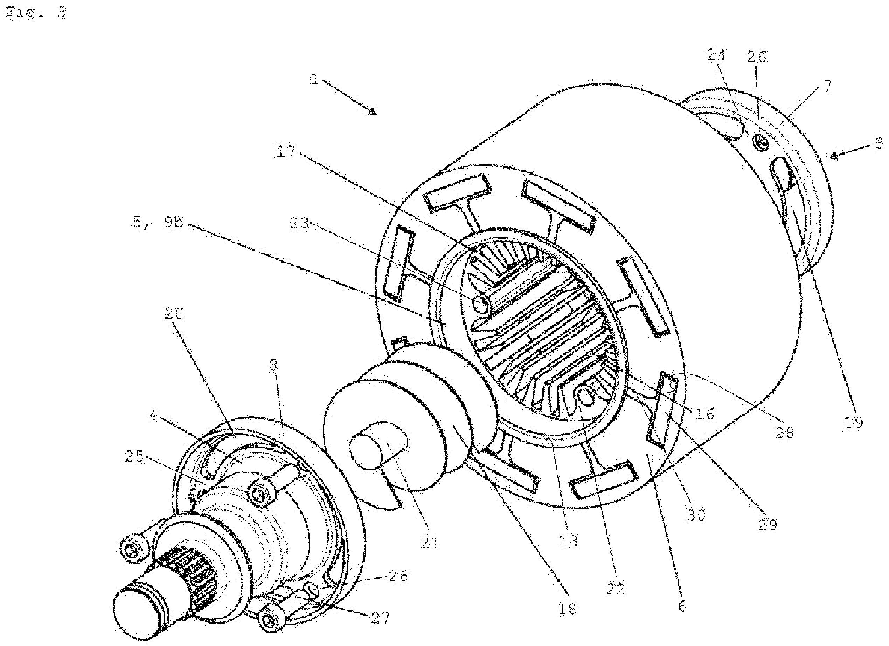

Der erste Wellenzapfen 3 ist formschlüssig und drehfest mit dem Füllkörper 5 verbunden, und der zweite Wellenzapfen 4 ist ebenfalls formschlüssig und drehfest mit dem Füllkörper 5 verbunden. Die Verbindung zwischen den Wellenzapfen 3 bzw. 4 und dem Füllkörper 5 kann beispielsweise mittels einer Schraubenverbindung (vgl. z.B. Fig. 2 und 3) erfolgen. Durch die drehfeste Verbindung zwischen dem Füllkörper 5 und dem ersten Wellenzapfen 3 einerseits sowie dem zweiten Wellenzapfen 4 andererseits können Drehmomente zwischen den Wellenzapfen 3 und 4 und dem Füllkörper 5 übertragen werden. Insbesondere kann eine Rotationsbewegung des ersten Wellenzapfens 3 und/oder des zweiten Wellenzapfens 4 auf den Füllkörper 5 übertragen werden. Durch die drehfeste Verbindung zwischen dem Füllkörper 5 und dem Rotorblechpaket 6 (siehe oben) können auch Rotationsbewegungen und Drehmomente von dem Füllkörper 5 auf das Rotorblechpaket 6 übertragen werden. Folglich können Rotationsbewegungen und Drehmomente von dem ersten Wellenzapfen 3 und dem zweiten Wellenzapfen 4 über den Füllkörper 5 auf das Rotorblechpaket 6 übertragen werden und umgekehrt.

Die innere Mantelfläche 9 des Füllkörpers definiert einen axialen Kühlkanal 16 für Kühlluft, welcher entgegengesetzte Stirnseiten des Füllkörpers miteinander verbindet. Weiterhin sind mehrere Kühlrippen 17 vorgesehen, welche in Umfangsrichtung im Wesentlichen gleichmäßig verteilt sind, von der inneren Mantelfläche 9 des Füllkörpers 5 radial nach innen abstehen und sich in axialer Richtung zwischen einander entgegengesetzten Stirnseiten des Füllkörpers 5 erstrecken.

Die Länge der Kühlrippen 17 ist derart bemessen, dass ein zentraler Bereich des Kühlkanals 16 frei verbleibt bzw. nicht ausgefüllt ist. Innerhalb des nicht ausgefüllten Kühlkanals kann eine Förderspirale 18 für Kühlluft angeordnet sein. Weiterhin weist der erste Wellenzapfen 3 mehrere Lufteintrittsöffnungen 19 zur Luftzufuhr in axialer Richtung L auf und der zweite Wellenzapfen 4 weist mehrere Luftaustrittsöffnungen 20 zur Luftabfuhr in axialer Richtung L auf. Eine zentrale Welle 21 der Förderspirale 18 ist drehfest innerhalb des ersten Wellenzapfens 3 und innerhalb des zweiten Wellenzapfens 4 gelagert, sodass bei drehenden Wellenzapfen 3 und 4 sich auch die Förderspirale 18 dreht und Kühlluft in axialer Richtung über die Lufteintrittsöffnung 19 angesogen wird, mittels der Förderspirale 18 durch den axialen Kühlkanal 16 gefördert wird und durch die Austrittsöffnungen 20 in axialer Richtung L ausgestoßen wird.

Fig. 2 bis 4 zeigen, wie ein erfindungsgemäßer Rotor 1 (z.B. derjenige nach Fig. 1) für einen Synchronmotor im Detail ausgestaltet sein kann. So können von der inneren Mantelfläche 9 des Füllkörpers 5 mehrere rippenartige Kühl-Vorsprünge 17 radial nach innen abstehen. Zwischen den Kühl-Vorsprüngen 17 sind drei um 120° in Umfangsrichtung versetzt zueinander angeordnete rippenartige Befestigungs-Vorsprünge 22 angeordnet, welche ebenfalls von der inneren Mantelfläche 9 des Füllkörpers 5 radial nach innen abstehen und jeweils eine Gewindebohrung 23 aufweisen. Die Wellenzapfen 3, 4 weisen jeweils einen Befestigungsflansch 24, 25 mit drei um 120° in Umfangsrichtung versetzt zueinander angeordneten Bohrungen 26 auf. Mittels jeweils drei Schrauben 27 sind die Verbindungsflansche 24, 25 der Wellenzapfen 3, 4 mit den rippenartigen Befestigungs-Vorsprüngen 22 des Füllkörpers 5 verschraubt.

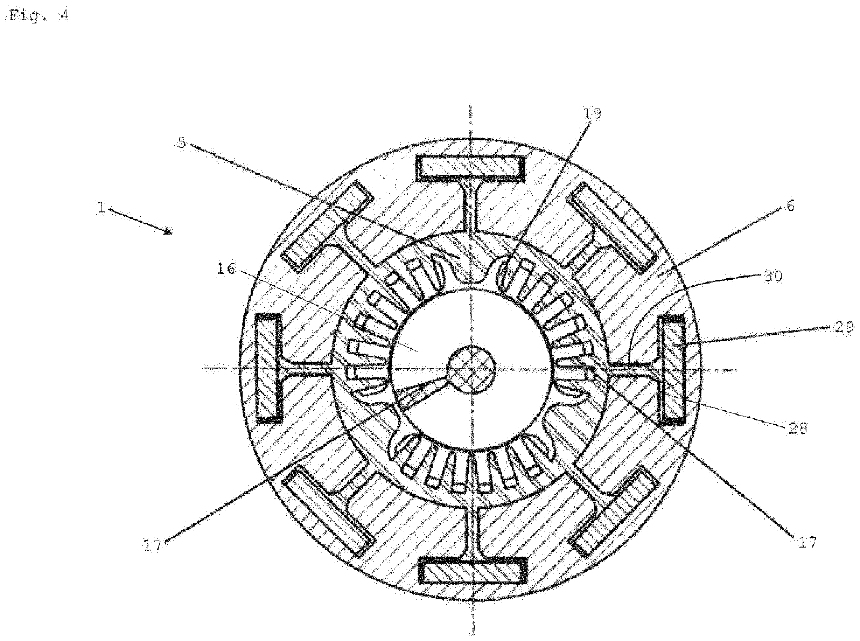

Das Rotorblechpaket 6 kann ferner Aufnahmekanäle 28 ausbilden, innerhalb welchen Permanentmagnete 29 aufgenommen sind, wobei Freiräume zwischen den Permanentmagneten 29 und den Aufnahmekanälen 28 derart mit der Aluminium-Druckgusslegierung des Füllkörpers 5 ausgegossen sind, dass die Permanentmagnete 29 mittels des Füllkörpers 5 innerhalb der Aufnahmekanäle 28 fixiert sind. Wie insbesondere in Fig. 3 und 4 zu erkennen ist, ist jeder der Aufnahmekanäle 28 über einen Verbindungskanal 30 mit dem übrigen Füllkörper 5 verbunden. Die Verbindungskanäle 30 dienen somit dazu, während des Angusses des Füllkörpers 5 an das Rotorblechpaket 6 flüssige Aluminium-Druckgusslegierung in die mit den Permanentmagneten 29 bestückten Aufnahmekanäle 28 leiten zu können.

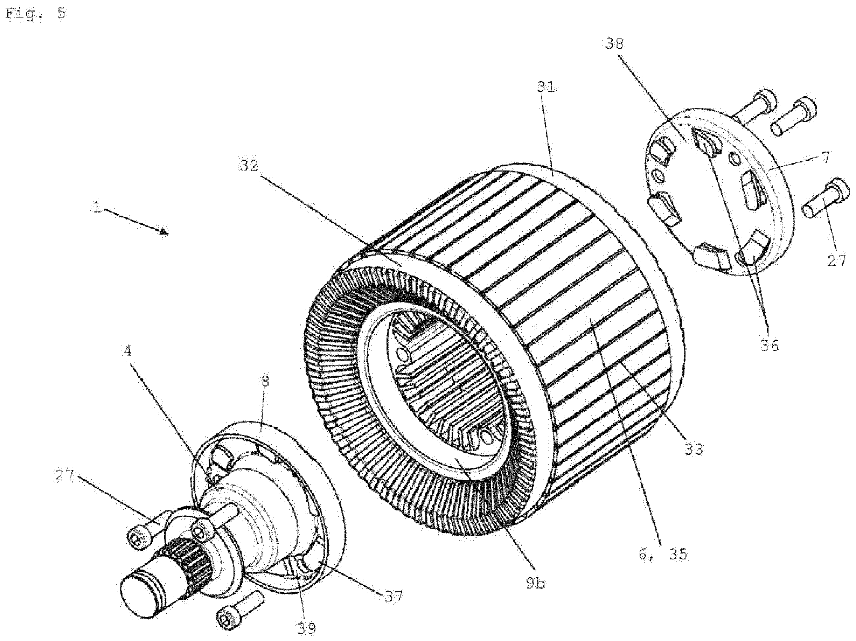

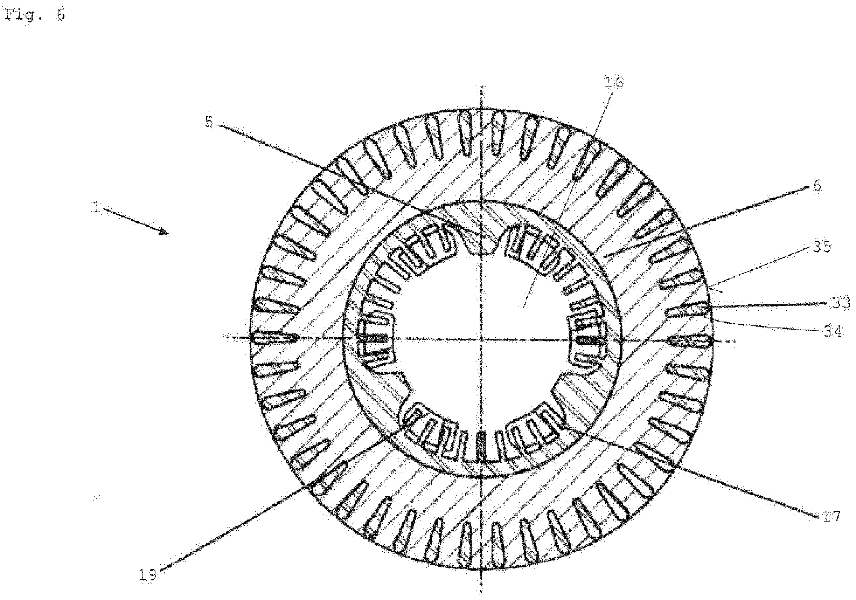

Fig. 5 und 6 zeigen einen weiteren Rotor 1, welcher dazu geeignet ist, in einem Asynchronmotor eingesetzt zu werden. Der Rotor 1 umfasst einen ersten Kurzschlussring 31, einen zweiten Kurzschlussring 32 und mehrere Kurzschlussstäbe 33. Der erste Kurschlussring 31 besteht aus einer Aluminium-Druckgusslegierung, welche an eine erste Stirnseite des Rotorblechpakets 6 angegossen ist. Der zweite Kurzschlussring 32 besteht ebenfalls aus einer Aluminium-Druckgusslegierung, welche an eine zweite Stirnseite des Rotorblechpakets 6 angegossen ist. Weiterhin bestehen auch die mehreren Kurzschlussstäbe 33 aus einer Aluminium-Druckgusslegierung, welche derart in axiale Nuten 34 einer äußeren Mantelfläche 35 des Rotorblechpakets 6 gegossen ist, dass die Kurschlussstäbe 33 jeweils mit dem ersten Kurzschlussring 31 und mit dem zweiten Kurzschlussring 32 verbunden sind.

Das Angießen der Aluminium-Druckgusslegierung kann dabei derart erfolgen, dass die Kurzschlussstäbe 33 und die Kurzschlussringe 31, 32 mechanisch und elektrisch nicht mit dem Füllkörper 5 verbunden sind. Bei der Aluminium-Druckgusslegierung, welche zum Herstellen der Kurzschlussstäbe 33 verwendet werden, handelt es sich in dem durch Fig. 5 und 6 gezeigten Ausführungsbeispiel um die gleiche Aluminium-Druckgusslegierung, welche zum Herstellen des ersten Kurzschlussrings 31 und des zweiten Kurzschlussrings 32 sowie zur Herstellung des Füllkörpers 5 verwendet wird.

Weiterhin sind in die Wellenzapfen 3, 4 jeweils sechs in Umfangsrichtung verteilte Lüfterradschaufeln 36, 37 integriert. Erste Lüfterradschaufeln 36 des ersten Wellenzapfens stehen von einer ersten Stirnseite 38 des ersten Wellenzapfens 3 ab und ragen in den axialen Kühlkanal 16 innerhalb des Füllkörpers 5 hinein, wobei die ersten Lüfterradschaufeln 36 in Strömungsrichtung jeweils nach einer der Lufteintrittsöffnungen 19 angeordnet sind. Zweite Lüfterradschaufeln 37 des zweiten Wellenzapfens 4 stehen von einer zweiten Stirnseite 39 des zweiten Wellenzapfens 4 ab, ragen jedoch nicht in den axialen Kühlkanal 16 innerhalb des Füllkörpers 5 hinein, sondern sind von dem axialen Kühlkanal 16 weg orientiert, wobei die zweiten Lüfterradschaufeln 37 in Strömungsrichtung jeweils nach einer der Luftaustrittsöffnungen 20 angeordnet sind.

Sofern sich die Wellenzapfen 3 und 4 drehen, rotieren auch die Lüfterradschaufeln 36, 37, wodurch Kühlluft in axialer Richtung über die Lufteintrittsöffnung 19 über die ersten Lüfterradschaufeln 36 angesogen wird, durch den axialen Kühlkanal 16 gefördert wird und mittels der zweiten Lüfterradschaufeln 37 durch die Austrittsöffnungen 20 in axialer Richtung L ausgestoßen bzw. herausgesogen wird.

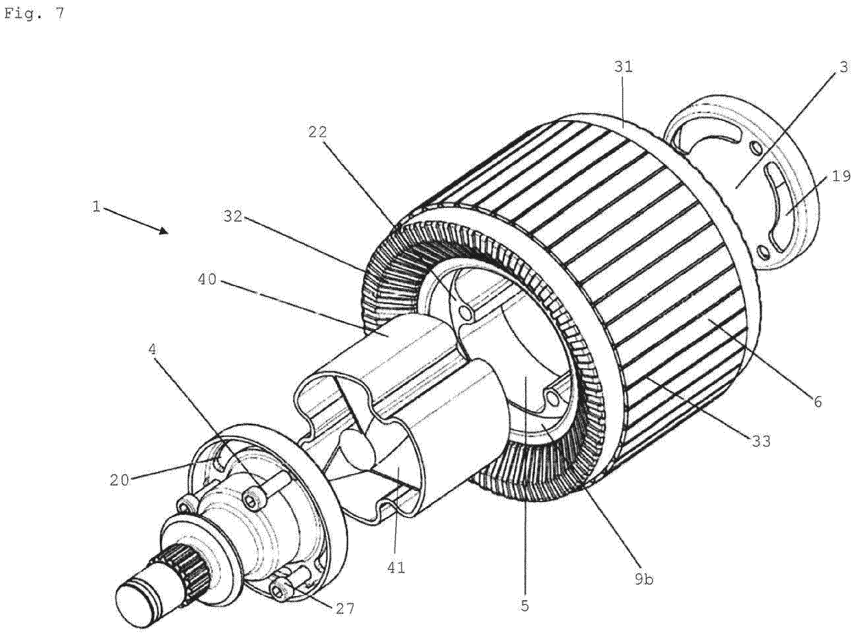

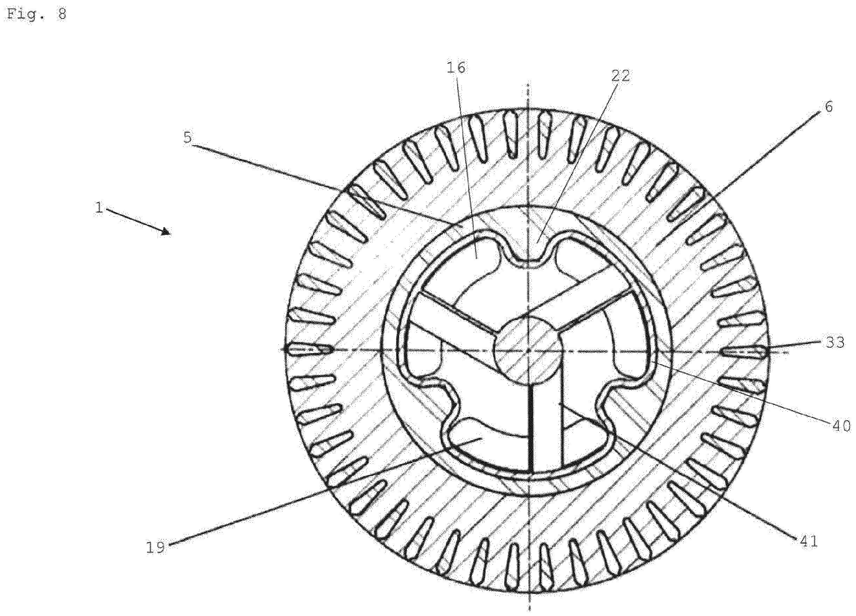

Fig. 7 und 8 zeigen einen weiteren Rotor 1, welcher dazu geeignet ist, in einem Asynchronmotor eingesetzt zu werden. Der Rotor 1 nach Fig. 7 und 8 unterscheidet sich von dem Rotor nach Fig. 5 und 6 insbesondere durch die Ausgestaltung der Lüftungseinheit und der Kühlrippen. Gemäß dem durch Fig. 7 und 8 gezeigten Ausführungsbeispiel umfasst die Lüftungseinheit einen Axiallüfterradeinsatz 40 mit drei Schaufeln 41, wobei der Axiallüfterradeinsatz 40 formschlüssig drehfest mit den rippenartigen Befestigungs-Vorsprüngen 22 des Füllkörpers 5 verbunden ist, wobei der Axiallüfterradeinsatz 40 innerhalb des axialen Kühlkanals 16 angeordnet ist. Dabei korrespondiert eine außenumfängliche Form des Axiallüfterradeinsatzes 40 mit den rippenartigen Befestigungs-Vorsprüngen 22 des Füllkörpers 5, wobei von der inneren Mantelfläche 9 des Füllkörpers 5 keine rippenartigen Kühlrippen radial nach innen abstehen (wie dies durch die Ausführungsbeispiele nach Fig. 2 bis 6 gezeigt ist).

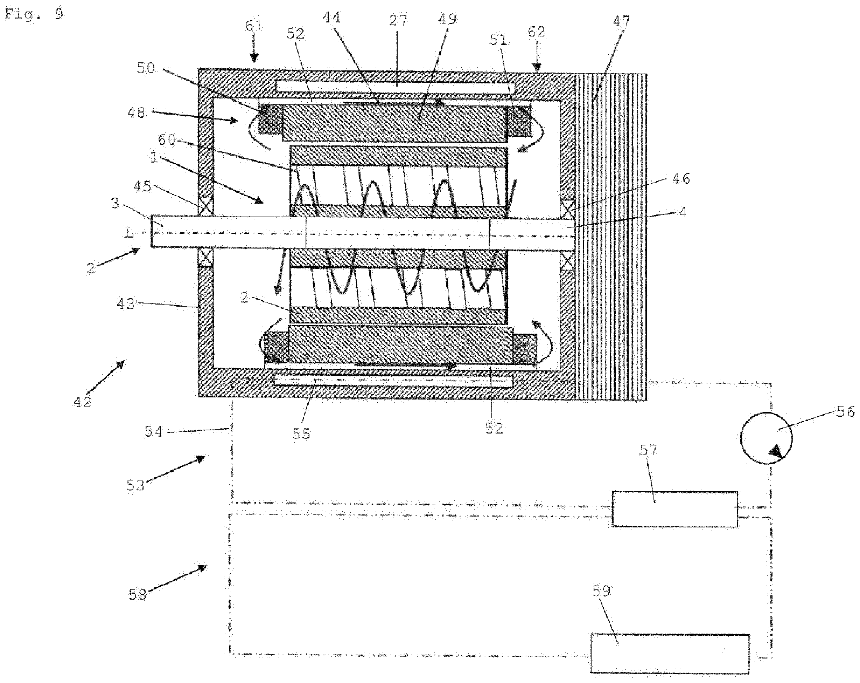

Fig. 9 zeigt eine elektrische Maschine 42 mit einem Gehäuse 43 und einem Luft-Kühlkreislauf 44, dessen Förderrichtung innerhalb des Gehäuses 43 mit Pfeilen veranschaulicht ist. Innerhalb des Gehäuses 43 ist eine Rotorwelle 2 drehbar innerhalb eines ersten Wälzlagers 45 und innerhalb eines zweiten Wälzlagers 46 gelagert, wobei die Rotorwelle einen ersten Wellenzapfen 3 und einen zweiten Wellenzapfen 4 umfasst. An die sich durch Fig. 9 rechts dargestellte Seite des Gehäuses 43 schließt sich ein Inverter 47 der elektrischen Maschine 42 an.

Die Wellenzapfen 3, 4 sind drehfest mit einem nicht durch Fig. 9 gezeigten Füllkörper (vgl. Fig. 1 bis 8) verbunden, welcher wiederum drehfest mit einem Rotorblechpaket 6 verbunden ist (nicht durch Fig. 9 gezeigt, vgl. hierzu Fig. 1 bis 8). Bei rotierenden Wellenzapfen 3, 4 dreht sich somit auch das Rotorblechpaket 6. Das Rotorblechpaket 6 wird mit geringem Abstand radial von einem fest stehenden Stator 48 umgeben, welcher ein Statorblechpaket 49 umfasst und an seinen beiden gegenüberliegenden Stirnseiten jeweils einen Stator-Wickelkopf 50 und 51 aufweist, welche in axialer Richtung über zwei einander gegenüberliegende axiale Stirnseiten des Rotorblechpakets 6 hinausragen. Der Stator 48 wird mit Abstand in radialer Richtung vollumfänglich von dem Gehäuse 43 umgeben. Dabei bilden das Gehäuse 43 und der Stator 48 zwischen sich einen äußeren Kühlkanal 52 aus.

Der äußere Kühlkanal 52 setzt sich beidseitig an das Statorblechpaket 49 anschließend zwischen den Stator-Wickelköpfen 50, 51 und dem Gehäuse 43 fort.

Nachdem Luft, wie im Folgenden dargestellt wird, Wärme insbesondere von dem Rotor 1 und dem Stator 48 aufgenommen hat, wird sie durch das Gehäuse 43 rückgekühlt, welches wiederum durch einen Umlauf-Kühlkreislauf 53 rückgekühlt wird. Der Umlauf-Kühlkreislauf 53 umfasst eine Kühlmittelleitung 54 außerhalb des Gehäuses 43 und einen Flüssigkeits-Kühlkanal 55 innerhalb des Gehäuses 43. Innerhalb des Umlauf-Kühlkreislaufs 53 zirkuliert ein flüssiges Kühlmittel.

Innerhalb der Kühlmittelleitung 54 ist eine Förderpumpe 56 angeordnet, welche Kühlmittel aus dem Flüssigkeits-Kühlkanal 55 in die Kühlmittelleitung 54 ansaugt und über einen Wärmetauscher 57 wieder zurück in den Flüssigkeits-Kühlkanal 54 fördert. Zur Kühlung des Kühlmittels innerhalb des Wärmetauschers 57 wird dieser zusätzlich von Kühlwasser durchströmt, welches in einem Hauptkühlkreislauf 58 zirkuliert und wiederum von einem Hauptwasserkühler 59 gekühlt wird.

Wird die elektrische Maschine 42 in den Betriebszustand versetzt, so rotiert die Rotorwelle 2 und mit ihr auch das Rotorblechpaket 6 und schraubenspindelförmigen Kühlkanäle 60, welche in dem durch Fig. 9 gezeigten Ausführungsbeispiel die Lüftungseinheit des Rotors 1 ausbilden. Anstatt der schraubenspindelförmigen Kühlkanäle 60 können jedoch auch - wie durch Fig. 1 bis 8 gezeigt - andere Lüftungseinheiten zum Einsatz kommen (z.B. die Förderspirale 18, die Lüfterradschaufeln 36, 37 oder der Axiallüfterradeinsatz 40).

Durch die Rotation der schraubenspindelförmigen Kühlkanäle 60, welche jeweils eine Förderspirale im Sinne einer Schneckenpumpe ausbilden, bilden sich innerhalb des geschlossenen Gehäuses 43 der elektrischen Maschine 42 auf einander gegenüberliegenden Stirnseiten des Rotors 1 eine Druckseite 61 und eine Sogseite 62 aus.

Durch die Sogwirkung der schraubenspindelförmigen Kühlkanäle 60 auf der Sogseite 62 wird Luft über den äußeren Kühlkanal 52 über den Umfang des Stators 48 angesogen. Über den Stator-Wickelkopf 51, welcher beim Passieren der Kühlluft gekühlt wird, wird Kühlluft in das Rotorblechpaket 6 gesogen und über die schraubenspindelförmigen Kanäle 60 auf die Druckseite 61 der elektrischen Maschine 42 gefördert. Von dort aus passiert die Kühlluft den Stator-Wickelkopf 50 der anderen Statorseite, um wieder über den Umfang des Statorblechpaketes 49 auf die Sogseite 62 zu wechseln.

Auf diese Weise kühlt die Kühlluft insbesondere das Rotorblechpaket 6 von innen, die Rotorwelle 2 mit ihren Wellenzapfen 3 und 4, die Wälzlager 45 und 46, die Statorwickelköpfe 50 und 51 sowie das Statorblechpaket 49. Über den Umlauf-Kühlkreislauf 53 wird das Gehäuse 43 direkt und die Kühlluft indirekt über das Gehäuse 43 rückgekühlt.

## Patentansprüche

1. Rotor (1) für eine elektrische Maschine, der Rotor (1) umfassend ein Rotorblechpaket (6), einen Füllkörper (5) aus einer Aluminium-Druckgusslegierung, welche an das Rotorblechpaket (6) angegossen ist, einen ersten Wellenzapfen (3) mit wenigstens einer Lufteintrittsöffnung (19), einen zweiten Wellenzapfen (4) mit wenigstens einer Luftaustrittsöffnung (20) und eine Lüftungseinheit (18; 36, 37; 40; 60), wobei
- der Füllkörper (5) das Rotorblechpaket (6) drehfest mit dem ersten Wellenzapfen (3) und mit dem zweiten Wellenzapfen (4) verbindet,
- das Rotorblechpaket (6) eine zentrale axiale Bohrung (11) aufweist, welche durch den Füllkörper (5) derart teilweise ausgefüllt wird, dass ein axialer Kühlkanal (16) für Kühlluft innerhalb der zentralen Bohrung (11) des Rotorblechpakets (6) gebildet wird,
- die Wellenzapfen (3, 4) die Lüftungseinheit (18; 36, 37; 40; 60) antreiben, und
- die Lüftungseinheit (18; 36, 37; 40; 60) dazu eingerichtet ist, einen Luftstrom über die Lufteintrittsöffnung (19) anzusaugen, durch den axialen Kühlkanal (16) zu fördern und über die Luftaustrittsöffnung (20) auszustoßen.

2. Rotor (1) nach Anspruch 1, wobei
- der Rotor (1) für eine elektrische Maschine in Form eines Synchronmotors geeignet ist,
- das Rotorblechpaket (6) Aufnahmekanäle (28) ausbildet, innerhalb welchen Permanentmagnete (29) aufgenommen sind, und
- Freiräume zwischen den Permanentmagneten (29) und den Aufnahmekanälen (28) derart von dem Füllkörper (5) ausgefüllt werden, dass die Permanentmagnete (29) mittels des Füllkörpers (5) innerhalb der Aufnahmekanäle (28) fixiert sind.

3. Rotor (1) nach Anspruch 1, wobei der Rotor (1) für eine elektrische Maschine in Form eines Asynchronmotors geeignet ist, der Rotor (1) ferner umfassend
- einen ersten Kurschlussring (31) aus einer Aluminium-Druckgusslegierung, welche an das Rotorblechpaket (6) angegossen ist,
- einen zweiten Kurzschlussring (32) aus einer Aluminium-Druckgusslegierung, welche an das Rotorblechpaket (6) angegossen ist, und
- mehrere Kurzschlussstäbe (33) aus einer Aluminium-Druckgusslegierung, welche derart in axiale Nuten (34) einer äußeren Mantelfläche (35) des Rotorblechpakets (6) gegossen ist, dass die Kurschlussstäbe (33) jeweils mit dem ersten Kurzschlussring (31) und mit dem zweiten Kurzschlussring (32) verbunden sind.

4. Rotor (1) nach einem der vorstehenden Ansprüche, wobei
- die Lüftungseinheit (18) eine Förderspirale (18) umfasst,
- eine Antriebswelle (21) der Förderspirale (18) drehfest innerhalb des ersten Wellenzapfens (3) und des zweiten Wellenzapfens (4) gelagert ist, und
- die Förderspirale (18) innerhalb des axialen Kühlkanals (16) angeordnet ist.

5. Rotor (1) nach einem der vorstehenden Ansprüche, wobei die Lüftungseinheit (36, 37) in die Wellenzapfen integrierte Lüfterradschaufeln (36, 37) umfasst.

6. Rotor (1) nach einem der vorstehenden Ansprüche, wobei
- die Lüftungseinheit (40) einen Axiallüfterradeinsatz (40) umfasst,
- der Axiallüfterradeinsatz (40) formschlüssig drehfest mit dem Füllkörper (5) verbunden ist und
- der Axiallüfterradeinsatz (40) innerhalb des axialen Kühlkanals (16) angeordnet ist.

7. Rotor (1) nach einem der vorstehenden Ansprüche, wobei von einer inneren Mantelfläche (9) des Füllkörpers (5) mehrere rippenartige erste Vorsprünge (17) radial nach innen abstehen, und wobei die Wellenzapfen (3, 4) mittels Befestigungsmitteln (27) an zweiten rippenartigen Vorsprüngen (22) des Füllkörpers (5) befestigt sind, wobei die zweiten rippenartigen Vorsprünge (22) ebenfalls von der inneren Mantelfläche (15) des Grundkörpers (5) radial nach innen abstehen.

8. Rotor (1) nach einem der vorstehenden Ansprüche, wobei eine innere Mantelfläche (9) des Füllkörpers (5) jeweils einen Zentrierungsansatz (9a, 9b) für den ersten Wellenzapfen (3) und für den zweiten Wellenzapfen (4) ausbildet.

9. Rotor (1) nach einem der vorstehenden Ansprüche, wobei das Rotorblechpaket (6) in axialer Richtung (L) formschlüssig und kraftschlüssig mit dem Füllkörper (5) verbunden ist.

10. Elektrische Maschine (42) für ein Fahrzeug, die elektrische Maschine (42) umfassend
- einen Rotor (1) nach einem der vorstehenden Ansprüche, wobei der Rotor (1) eine in zwei Wälzlagern (45, 46) gelagerte Rotorwelle (2) aufweist,
- einen Stator (48) mit einem Statorblechpaket (49) und mit Stator-Wickelköpfen (50, 51), welche an gegenüberliegenden Stirnseiten des Statorblechpakets (49) angeordnet sind, und
- ein Gehäuse (43), welches den Stator (48) in radialer Richtung umgibt,
wobei
- der Stator (48) und das Gehäuse (43) einen äußeren Kühlkanal (52) zwischen sich ausbilden, welcher entlang des Statorblechpakets (49) und der Stator-Wickelköpfe (50, 51) verläuft und zwei gegenüberliegende Stirnseiten der Stator-Wickelköpfe (50, 51) miteinander verbindet,
- die Lüftungseinheit (60) des Rotors (1) dazu eingerichtet ist, bei sich drehender Rotorwelle (2) auf einer ersten Stirnseite des Rotorblechpakets (6) des Rotors (1) eine Sogseite (62) und auf einer zweiten Stirnseite des Rotorblechpakets (6) eine Druckseite (61) auszubilden, so dass Luft auf der Sogseite (62) angesaugt und durch den axialen Kühlkanal (60) des Rotors (1) sowie den äußeren Kühlkanal (52) gefördert wird, und
- das Gehäuse (43) einen Flüssigkeits-Kühlkanal (55) eines Umlaufkühlkreislaufs (53) umfasst, innerhalb welchem eine Kühlflüssigkeit zirkuliert und das Gehäuse (43) kühlt.

## Claims

1. Rotor (1) for an electric machine, the rotor (1) comprising a laminated rotor core (6), a filler body (5) composed of an aluminium die-cast alloy, which is cast onto the laminated rotor core (6), a first shaft journal (3) with at least one air inlet opening (19), a second shaft journal (4) with at least one air outlet opening (20), and a ventilation unit (18; 36, 37; 40; 60), wherein
- the filler body (5) connects the laminated rotor core (6) rotationally conjointly to the first shaft journal (3) and to the second shaft journal (4),
- the laminated rotor core (6) has a central axial bore (11) which is partially filled by the filler body (5) such that an axial cooling channel (16) for cooling air is formed within the central bore (11) of the laminated rotor core (6),
- the shaft journals (3, 4) drive the ventilation unit (18; 36, 37; 40; 60), and
- the ventilation unit (18; 36, 37; 40; 60) is designed to draw an air stream in via the air inlet opening (19), convey said air stream through the axial cooling channel (16), and discharge said air stream via the air outlet opening (20).

2. Rotor (1) according to Claim 1, wherein
- the rotor (1) is suitable for an electric machine in the form of a synchronous motor,
- the laminated rotor core (6) forms receiving channels (28) within which permanent magnets (29) are received, and
- free spaces between the permanent magnets (29) and the receiving channels (28) are filled by the filler body (5) such that the permanent magnets (29) are fixed within the receiving channels (28) by means of the filler body (5).

3. Rotor (1) according to Claim 1, wherein the rotor (1) is suitable for an electric machine in the form of an asynchronous motor, the rotor (1) furthermore comprising
- a first short-circuiting ring (31) composed of an aluminium die-cast alloy, which is cast onto the laminated rotor core (6),
- a second short-circuiting ring (32) composed of an aluminium die-cast alloy, which is cast onto the laminated rotor core (6), and
- a plurality of short-circuiting bars (33) composed of an aluminium die-cast alloy, which is cast into axial grooves (34) of an outer shell surface (35) of the laminated rotor core (6) such that the short-circuiting bars (33) are connected in each case to the first short-circuiting ring (31) and to the second short-circuiting ring (32).

4. Rotor (1) according to any of the preceding claims, wherein
- the ventilation unit (18) comprises a conveying spiral (18),
- a drive shaft (21) of the conveying spiral (18) is mounted rotationally conjointly within the first shaft journal (3) and the second shaft journal (4), and
- the conveying spiral (18) is arranged within the axial cooling channel (16).

5. Rotor (1) according to any of the preceding claims, wherein the ventilation unit (36, 37) comprises fan impeller blades (36, 37) which are integrated into the shaft journals.

6. Rotor (1) according to any of the preceding claims,
wherein
- the ventilation unit (40) comprises an axial fan impeller insert (40),
- the axial fan impeller insert (40) is connected rotationally conjointly in positively locking fashion to the filler body (5), and
- the axial fan impeller insert (40) is arranged within the axial cooling channel (16).

7. Rotor (1) according to any of the preceding claims, wherein a plurality of fin-like first projections (17) project radially inward from an inner shell surface (9) of the filler body (5), and wherein the shaft journals (3, 4) are fastened by fastening means (27) to second fin-like projections (22) of the filler body (5), wherein the second fin-like projections (22) likewise project radially inward from the inner shell surface (15) of the main body (5) .

8. Rotor (1) according to any of the preceding claims, wherein an inner shell surface (9) of the filler body (5) forms in each case one centring shoulder (9a, 9b) for the first shaft journal (3) and for the second shaft journal (4) .

9. Rotor (1) according to any of the preceding claims, wherein the laminated rotor core (6) is connected to the filler body (5) in positively locking and non-positively locking fashion in the axial direction (L).

10. Electric machine (42) for a vehicle, the electric machine (42) comprising
- a rotor (1) according to any of the preceding claims, wherein the rotor (1) has a rotor shaft (2) mounted in two rolling bearings (45, 36),
- a stator (48) having a laminated stator core (49) and having stator winding heads (50, 51) which are arranged at opposite end sides of the laminated stator core (49), and
- a housing (43) which surrounds the stator (48) in a radial direction,
wherein
- the stator (48) and the housing (43) form, between them, an outer cooling channel (52) which runs along the laminated stator core (49) and the stator winding heads (50, 51) and which connects two opposite end sides of the stator winding heads (50, 51) to one another,
- the ventilation unit (60) of the rotor (1) is designed to form a suction side (62) on a first end side of the laminated rotor core (6) of the rotor (1), and a pressure side (61) on a second end side of the laminated rotor core (6), as the rotor shaft (2) rotates, such that air is drawn in on the suction side (62) and conveyed through the axial cooling channel (60) of the rotor (1) and the outer cooling channel (52), and
- the housing (43) comprises a liquid cooling channel (55) of a circulation cooling circuit (53), within which a cooling liquid circulates and cools the housing (43).

## Revendications

1. Rotor (1) pour une machine électrique, le rotor (1) comprenant un empilage de tôles de rotor (6), un corps de remplissage (5) en un alliage d'aluminium coulé sous pression, lequel est coulé sur l'empilage de tôles de rotor (6), un premier tourillon d'arbre (3) pourvu d'au moins une ouverture d'entrée d'air (19), un deuxième tourillon d'arbre (4) pourvu d'au moins une ouverture de sortie d'air (20) et une unité de ventilation (18 ; 36, 37 ; 40 ; 60),
- le corps de remplissage (5) reliant l'empilage de tôles de rotor (6) en rotation solidaire au premier tourillon d'arbre (3) et au deuxième tourillon d'arbre (4),
- l'empilage de tôles de rotor (6) possédant un alésage axial central (11) qui est partiellement rempli par le corps de remplissage (5) de telle sorte qu'un canal de refroidissement axial (16) pour de l'air de refroidissement est formé à l'intérieur de l'alésage central (11) de l'empilage de tôles de rotor (6),
- les tourillons d'arbre (3, 4) entraînant l'unité de ventilation (18 ; 36, 37 ; 40 ; 60) et
- l'unité de ventilation (18 ; 36, 37 ; 40 ; 60) étant conçue pour aspirer un courant d'air par le biais de l'ouverture d'entrée d'air (19), le transporter à travers le canal de refroidissement axial (16) et l'expulser par l'ouverture de sortie d'air (20).

2. Rotor (1) selon la revendication 1,
- le rotor (1) étant approprié pour une machine électrique sous la forme d'un moteur synchrone,
- l'empilage de tôles de rotor (6) formant des canaux d'accueil (28) à l'intérieur desquels sont accueillis des aimants permanents (29), et
- les espaces libres entre les aimants permanents (29) et les canaux d'accueil (28) étant remplis par le corps de remplissage (5) de telle sorte que les aimants permanents (29) sont calés à l'intérieur des canaux d'accueil (28) au moyen du corps de remplissage (5).

3. Rotor (1) selon la revendication 1, le rotor (1) étant approprié pour une machine électrique sous la forme d'un moteur asynchrone, le rotor (1) comprenant en outre
- une première bague de court-circuit (31) en un alliage d'aluminium coulé sous pression, laquelle est coulée sur l'empilage de tôles de rotor (6),
- une deuxième bague de court-circuit (32) en un alliage d'aluminium coulé sous pression, laquelle est coulée sur l'empilage de tôles de rotor (6),
- plusieurs barres de court-circuit (33) en un alliage d'aluminium coulé sous pression, lesquelles sont coulées dans des rainures axiales (34) d'une enveloppe extérieure (35) de l'empilage de tôles de rotor (6) de telle sorte que les barres de court-circuit (33) sont respectivement reliées à la première bague de court-circuit (31) et à la deuxième bague de court-circuit (32).

4. Rotor (1) selon l'une des revendications précédentes,
- l'unité de ventilation (18) possédant une spirale de transport (18),
- l'arbre d'entraînement (21) de la spirale de transport (18) étant supporté en rotation solidaire à l'intérieur du premier tourillon d'arbre (3) et du deuxième tourillon d'arbre (4), et
- la spirale de transport (18) étant disposée à l'intérieur du canal de refroidissement axial (16).

5. Rotor (1) selon l'une des revendications précédentes, l'unité de ventilation (36, 37) comportant des aubes de roue de ventilateur (36, 37) intégrées dans les tourillons d'arbre.

6. Rotor (1) selon l'une des revendications précédentes,
- l'unité de ventilation (40) comportant un insert de roue de ventilateur axial (40),
- l'insert de roue de ventilateur axial (40) étant relié en rotation solidaire par complémentarité de formes avec le corps de remplissage (5) et
- l'insert de roue de ventilateur axial (40) étant disposé à l'intérieur du canal de refroidissement axial (16).

7. Rotor (1) selon l'une des revendications précédentes, plusieurs premières parties saillantes (17) de type nervure se dressant radialement vers l'intérieur d'une enveloppe interne (9) du corps de remplissage (5), et les tourillons d'arbre (3, 4) étant fixés par le biais de moyens de fixation (27) à des deuxièmes parties saillantes (22) de type nervure du corps de remplissage (5), les deuxièmes parties saillantes (22) de type nervure se dressant elles aussi radialement vers l'intérieur de l'enveloppe interne (15) du corps de base (5).

8. Rotor (1) selon l'une des revendications précédentes, une enveloppe interne (9) du corps de remplissage (5) formant respectivement un talon de centrage (9a, 9b) pour le premier tourillon d'arbre (3) et pour le deuxième tourillon d'arbre (4) .

9. Rotor (1) selon l'une des revendications précédentes, l'empilage de tôles de rotor (6) étant, dans la direction axiale (L), relié par complémentarité de formes et par assemblage de force au corps de remplissage (5).

10. Machine électrique (42) pour un véhicule, la machine électrique (42) comprenant
- un rotor (1) selon l'une des revendications précédentes, le rotor (1) possédant un arbre de rotor (2) supporté dans deux paliers de roulement (45, 46),
- un stator (48) comprenant un empilage de tôles de stator (49) et comprenant des têtes de bobine de stator (50, 51) qui sont disposées à des côtés frontaux opposés de l'empilage de tôles de stator (49), et
- un boîtier (43) qui entoure le stator (48) dans la direction radiale,
- le stator (48) et le boîtier (43) formant entre eux un canal de refroidissement externe (52) qui suit un tracé le long de l'empilage de tôles de stator (49) et des têtes de bobine de stator (50, 51) et relie entre eux deux côtés frontaux opposés des têtes de bobine de stator (50, 51),
- l'unité de ventilation (60) du rotor (1) étant conçue pour former, lorsque l'arbre de rotor (2) est en rotation, un côté de succion (62) sur un premier côté frontal de l'empilage de tôles de rotor (6) du rotor (1) et un côté refoulement (61) sur un deuxième côté frontal de l'empilage de tôles de rotor (6), de sorte que l'air est aspiré du côté de succion (62) et transporté à travers le canal de refroidissement axial (60) du rotor (1) ainsi que le canal de refroidissement externe (52), et
- le boîtier (43) comportant un canal de refroidissement à liquide (55) d'un circuit de refroidissement par circulation (53) à l'intérieur duquel circule un liquide de refroidissement et qui refroidit le boîtier (43).
